Europäisches Patentamt

European Patent Office

Office européen des brevets

(11) Publication number: **0 145 472**
A2

# (12) EUROPEAN PATENT APPLICATION

(21) Application number: 84308550.7

(22) Date of filing: 07.12.84

(51) Int. Cl.⁴: **A 47 B 57/06,** A 47 F 5/13,
F 16 B 7/16

(30) Priority: 12.12.83 DK 5702/83

(43) Date of publication of application: 19.06.85
Bulletin 85/25

(84) Designated Contracting States: AT BE CH DE FR GB IT
LI NL SE

(71) Applicant: VARIANTSYSTEMET A/S, Fynsvej 60,
DK-5500 Middelfart (DK)

(72) Inventor: Mogensen, Frede, Venusvej 17,
DK-8382 Hinnerup (DK)

(74) Representative: Westwood, Edgar Bruce et al,
STEVENS, HEWLETT & PERKINS 5, Quality Court
Chancery Lane, London WC2A 1HZ (GB)

(54) A shelf rack with height adjustable corner columns.

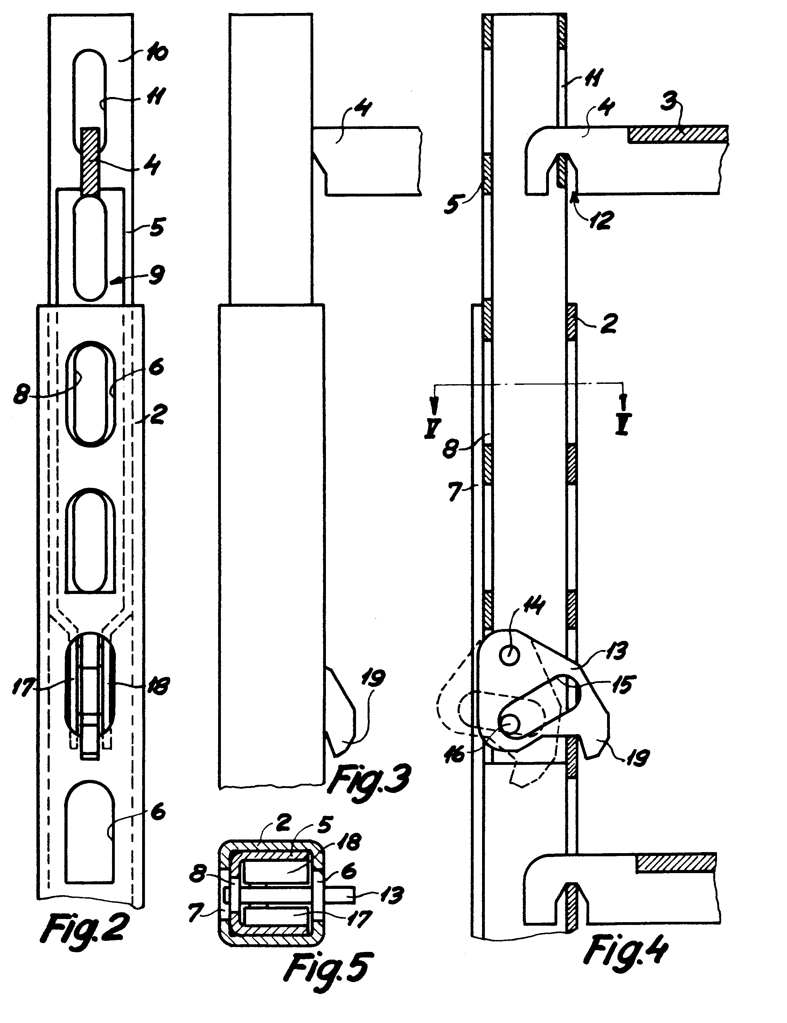

(57) A shelf rack comprising corner columns which each (see
fig. 4) have a row of holes to receive carrier pins (4) for the
shelf (2) and have a tube profile (5) insertable into the corner
column; the tube profile (5) serves as an extension and is like-
wise provided with holes (11) for carrier pins (4). The shelf rack
is unique in that each tube profile has locking means at the
bottom to fix the tube profile with respect to the corner co-
lumn, and these locking means are so designed as to freely
pass carrier pins protruding into the corner column. In a pre-
ferred embodiment the locking means are formed as a lock
member (13) which is pivotally journalled about a pivot (14) in
the tube profile (5), said lock member having a hook (19) clear-
ing the inwardly extending carrier pins in an inactive position
and engaging a hole in the corner column in an active position.

A shelf rack with height adjustable corner columns
------------------------------------------------------

A tube profile for a shelf rack with tubular, cross-sectionally polygonal corner columns which each have a row of holes at least along one front side to receive carrier pins for the shelf and which have a telescopic tube profile which is insertable into the corner column from above and is provided with locking means movable away from an inactive position in which the locking means is spaced from the front side of the corner column, to an active position in which a locking hook on the locking means is engagable with a hole in the corner column.

Shelf racks of this type are used for many different types of articles, and it has been found that in certain cases it is desirable to increase the height of the rack to make the most of the available space; more particularly the invention is thus related to an extension device for the corner columns so that the columns may be extended quickly and easily.

Telescopic extension devices are known in principle, e.g. from the US Patent Specification 4 181 230, which discloses a spring-loaded locking pin for mutual fixing of a column and a tube profile inserted in it. The Norwegian Patent Specification ..... (application 813876) discloses a similar extension device, which moreover contains means to keep a locking pawl out of engagement. This prior art is vitiated by the drawback that no shelf carrier pins can be hooked into the column as such carrier pins will collide with the inserted tube profile or with the locking means at any rate. This drawback will be understood best with reference to the special field of use of the invention. The fact is that shelf racks and articles placed on the shelves are mainly transported by means of lorries which can accomodate racks of a greater height than normal door height. When these racks arrive at the distributors, it is necessary in practice to remove the top shelf and lower the extension members in order for the shelf racks to be transported through a normal door. The latter operation should of course desirably be performed in such a manner that the other shelves on the rack and the associated articles are not affected by the operation.

The object of the invention is to provide a shelf rack of the present type where the extension device is so arranged that the insertable tube profile can unobstructedly pass the carrier pins which protrude into the corner columns from underlying shelves.

This object is achieved in that the tube profile has an oblong cavity which is open to the front side of the corner column and is designed to receive said carrier pins, and that the locking means comprise a pivotally journalled lock member placed downwardly in the tube profile and, in its inactive position, arranged to clear carrier pins protruding into the corner column. The inwardly protruding carrier pins then clear the tube profile because of its oblong cavity and clear the mentioned locking means in their inactive position. In the preferred embodiment the oblong cavity in the tube profile substantially extends in the entire length thereof so that just the top of the tube profile is arranged to receive carrier pins for a shelf.

To provide for a very inexpensive and reliable structure the lock member is preferably formed as a plate-shaped pendulum whose equilibrium position corresponds to non-activated locking means, and the pendulum has a convex edge facing the front side of the corner column. Owing to the mentioned convex edge the suspension point of the pendulum may be placed relatively close to the front side of the corner column, and the pendulum will be urged rearwardly, i.e. in a direction away from the front side of the corner column when the pendulum passes a carrier pin during the telescopic sliding operation.

Usually, the shelves and the associated carrier pins are so dimensioned that a pair of carrier pins at one end of the shelf are to extend through the corner column and are subsequently to be pushed into position when the opposite pair of carrier pins are correctly positioned. With this end in view, the tube profile side facing the rear side of the corner column has a plurality of holes which are flush with the holes in the front side of the corner column when the corner column and the tube profile are fixed with respect to each other.

The lock member might also extend upwardly with respect to its point of rotation, and in that case it would be expedient to spring-bias the lock member in a direction away from the active position.

The invention will be explained more fully by the following description of a preferred embodiment with reference to the drawing, in which

fig. 1 is an explanatory sketch of a shelf rack of the invention,

fig. 2 shows a corner column for the shelf rack, seen inwardly toward its front side,

0145472

fig. 3 shows the corner column from fig. 2, seen from the left to the right,

fig. 4 is a longitudinal section through the corner column from fig. 3, while

fig. 5 shows a section along the line V-V in fig. 4.

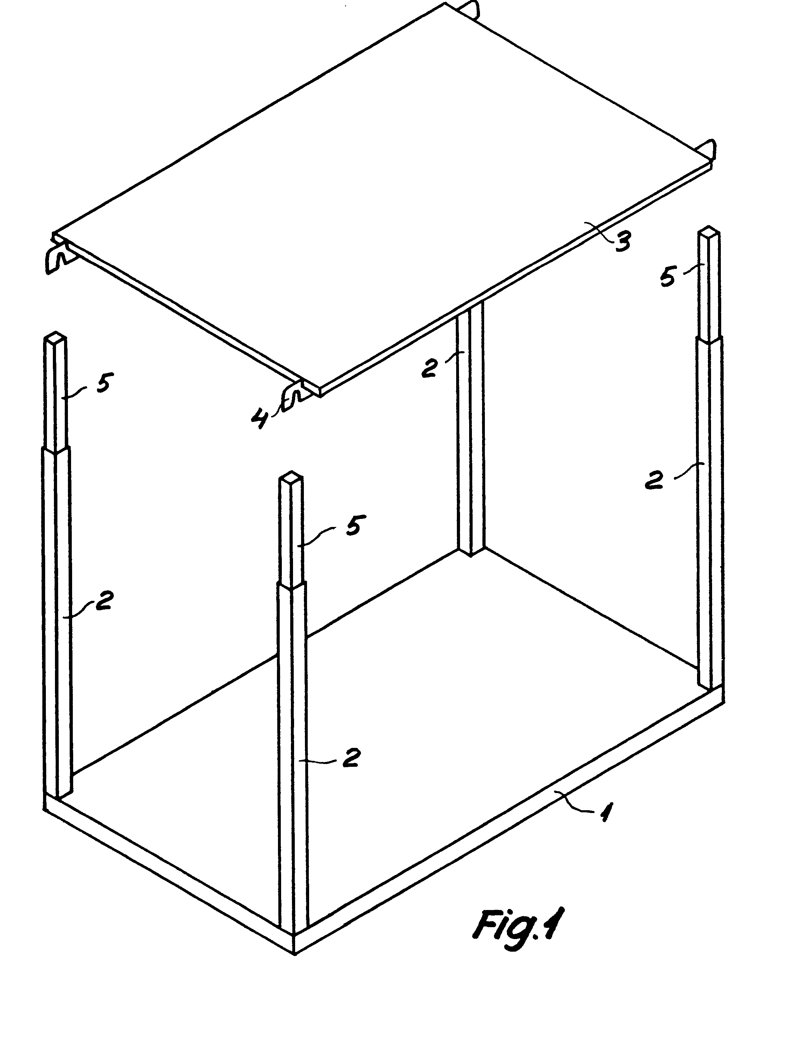

In fig. 1 there is shown a base plate 1 in whose corners a corner column 2 is placed, designed to carry a plurality of shelves of the type indicated at 3 in fig. 1. The shelves have four carrier pins 4 designed to be received in holes (not shown in fig. 1) in a front side of the corner columns. Each of the corner columns comprises a tube profile 5 which is telescopically slidable and which is designed to receive carrier pins from at least one shelf. The corner columns may be attached to the base plate 1 in various ways known per se, and the base plate 1 may either be provided with running wheels and/or be designed to be lifted by a fork truck.

Fig. 2 shows the top portion of a corner column 2 with its associated tube profile 5, seen inwardly toward the front side of the corner column. As appears from fig. 5, the corner column has a four-sided profile, which is provided with a plurality of holes 6 in the front side and whose rear side has a longitudinal slit 7. The tube profile 5 has a U-shaped cross-section and is provided with a row of holes 8 in the base of the U. Thus, the tube profile has a cavity 9 facing the front side of the corner column, except that the tube profile is closed at the top by means of a plate 10 provided with a hole 11. Like the holes 6, the hole 11 is designed to receive a carrier pin 4 on a shelf as the base of a notch 12 in the carrier pin engages the base of the said holes.

5

0145472

As mentioned before, the tube profile 5 is telescopically slidable within the corner column 2, and this extension assembly is provided with locking means to fix the parts with respect to each other. The preferred embodiment of the locking means of the invention appears especially from fig. 4, which shows a lock member 13 in the form of a plate which is suspended freely rotatable about a pivot 14, and which has a recess 15 through which another pivot 16 extends. These pivots 14, 16 are attached downwardly in the tube profile 5, the opposite side walls of said profile being bent inwardly as indicated at 17 and 18, as shown in figs. 2 and 3. Upon engagement with the base of the recess 15 the pivot 16 defines an active position for the lock member, which is shown by solid lines in fig. 4. In this position a hook 19 grips around the lower edge of a hole in the front side of the corner column, thus fixing the tube profile against downward movement with respect to the corner column.

In the shown, preferred embodiment the lock member 13 is suspended as a pendulum around the pivot 14 so that is has an equilibrium position which is shown in broken lines in fig. 4. When the tube profile 5 is lifted so that the hook 19 clears the hole in the corner column, the lock member 13 automatically assumes the mentioned equilibrium position, which is also called the inactive position. It is observed that the recess 15 is so long that the lock member 13 can be moved additionally to the left, (fig. 4), thus allowing the lock member to pass a carrier pin which extends into the corner column as the edge of the lock member facing the carrier pin is convex, as appears from fig. 4. The latter feature, in combination with the cavity 9 which opens to the front side of the corner column, enables the tube profile and the associated lock member to pass carrier pins extending into the corner column, and can thus be moved unobstructedly downwards in it. When the lock member is to shift from the inactive to the active position, it is just actuated from behind with one finger (to the right in fig. 4) when the lock member is in register with a hole in the corner column.

It will be appreciated that the lock member may be formed in other ways, as it may e.g. extend upwardly from the pivot 14 and be provided with a hook designed to grip around the base of a hole in the corner column. Such an embodiment normally requires the lock member to be spring-biased in a direction toward the inactive position. It is moreover conceivable that the embodiment shown in the figure is spring-biased too in a direction away from the active position. The lock member cannot capsize because the walls 17, 18 define a relatively narrow passage for the lock member. It will be appreciated that the lower portion of the tube profile may be reinforced by means of plates or bends so formed as to constitute a lower guide with respect to the corner column, thus providing for improved anchoring of the tube profile when it is fixed in its top position.

Before describing the mode of operation it should be noted that the tube profile is longer in practice than shown in the figures. The height of the shelf rack can therefore be reduced significantly by first removing the top shelf which is engaged with the tube profile, and lifting it somewhat so that the lock member is disengaged from the hole in the corner column, and the tube profile can then unobstructedly be moved down in the corner column so that the tube profile does not disappear completely in the corner column. This is feasible even though the tube profile during this movement passes one or more carrier pins in the corner column.

In the embodiment shown the tube profile is just arranged to support a single shelf at the top. If it should be desirable to place several shelves on the tube profile, it will be appreciated that this cannot readily be provided with additional cross members (corresponding to the lower portion of the plate 10 in fig. 2), as such cross members cannot pass carrier pins extending into the corner column. However, the desired function can still be obtained if such cross members are designed to rotate into the tubular U-profile so as to provide a coherent tube profile cavity open to the front side of the corner column.

Finally, it is observed that the holes 8 in the tube profile are flush with the holes 6 in the corner column when the lock member 13 is engaged with said column, which is important to the mounting of the shelves in the shelf rack. The shelves are placed so that, from an inclined position between the corner columns, they are first moved toward a pair of corner columns so far that the associated carrier pins extend through both a hole 6 and a hole 8, thereby allowing the opposite pair of carrier pins on the shelf to be lowered to the corresponding holes in the other pair of corner columns. The shelf is laterally displaced so that the recesses 12 in the carrier pins fall into place.

P a t e n t   C l a i m s :
-----------------------------

1. A tube profile for a shelf rack with tubular, cross-sectionally polygonal corner columns which each have a row of holes at least along one front side to receive carrier pins for the shelf and which have a telescopic tube profile which is insertable into the corner column from above and is provided with locking means movable away from an inactive position in which the locking means is spaced from the front side of the corner column, to an active position in which a locking hook on the locking means is engagable with a hole in the corner column, c h a r a c t e r i z e d  in that the tube profile has an oblong cavity which is open to the front side of the corner column and is designed to receive said carrier pins, and that the locking means comprise a pivotally journalled lock member placed downwardly in the tube profile and, in its inactive position, arranged to clear carrier pins protruding into the corner column.

2. A tube profile according to claims 1, c h a r a c t e r i z e d  in that the lock member is formed as a plate-shaped pendulum whose equilibrium position corresponds to non-activated locking means, and that the pendulum has a convex edge facing the front side of the corner column.

3. A shelf rack according to claim 1, wherein the rear side of the corner column has a longitudinal groove, c h a r a c t e r i z e d  in that the tube profile side facing the rear side of the corner column has a plurality of holes which are flush with the holes in the front side of the corner column when the corner column and the tube profile are fixed with respect to each other.

0145472

*Fig.1*

Fig.2

Fig.3

Fig.5

Fig.4